# EUROPEAN PATENT APPLICATION

(11) **EP 2 657 938 A1**
(43) Date of publication of application: **30.10.2013**
(21) Application number: 12166060.9
(22) Date of filing: 27.04.2012
(51) Int. Cl.: G11B 20/10, G10K 11/178, G10L 21/02, H04N 5/225, H04N 5/91

(54) **Noise handling during audio and video recording**

(71) Applicant: BlackBerry Limited, Waterloo, ON N2L 3W8 (CA)
(72) Inventor: Lee, Yun Sun, Rolling Meadows, IL 60008 (US); Gupta, Puneet, Rolling Meadows, IL 60008 (US)
(74) Representative: Moore, Barry

(57) **Abstract**

The disclosure is directed to techniques for noise handling in audio or video recording. Sounds that may be generated during the audio recording, such as by activation of switches, may appear as undesired artifacts in the recording. Techniques and apparatus are described whereby, when an undesired sound is generated, an inverse of the sound is applied to the sound, thereby canceling the unwanted sound from the recording. Further, the techniques can be adapted to many kinds of portable electronic devices having many kinds of switches and many kinds of undesirable sounds.

## Description

### FIELD

The disclosure is directed at electronic devices capable of making audio recordings (which may include video recordings), and more specifically, to noise handling during such recordings.

### BACKGROUND

Some portable electronic devices are capable of making audio recordings. For purposes of simplicity, all recordings that include audio may be referred to as "audio recordings." The portable electronic devices may be able to record audio by itself, or may be able to record audio in conjunction with visual information, commonly called video. Audio-only recordings and audio-video recordings may be deemed to be the most common examples of "audio recordings."

Portable electronic devices may be readily taken from place to place, and some portable electronic devices may be handheld, that is, sized and shaped to be held or carried in a human hand. Examples of portable electronic devices may include audio recorders and video cameras, and may also include devices with functionality beyond recording. Portable electronic devices may include, for example, cellular telephones, smart telephones, wireless organizers, tablet computers, notebook computers and other devices equipped with microphones or cameras or other recording equipment. A user may control one or more aspects of the recording by activation of one or more controlling components, which for simplicity will be referred to generally as switches.

### SUMMARY OF THE DISCLOSURE

Various parts of the portable electronic devices may make sounds. In the case of switches such as mechanical switches, activation (such as pressing or releasing a button or key) may result in an audible sound, such as a "click." In some cases, activation of a switch may result in an artificial sound, such as a machine-generated "beep." During an audio recording, such as when audio is recorded by itself or in concert with video, such sounds may be undesirable artifacts in the audio recording.

A user taking a video with a portable electronic device may, for example, activate one switch to begin the recording, a second switch to control (e.g., turn on or turn off) lighting, a third switch to zoom in, and a fourth switch to zoom out. Each of these switches may include moving parts that may make sounds when they move, or when they come in physical contact with other parts, or may otherwise generate an associated sound. In some cases, there may be sounds that are created artificially, such as "beeps," when a switch is activated. Activation of some switches may generate both natural and artificial sounds, such as a "click" and a "beep." In the audio recording that accompanies the video images, these "clicks" or "beeps" or other sounds may be picked up by a microphone on the portable electronic device. When the video is played back, the "clicks" or "beeps" or other sounds may be audible. In conventional language, these sounds can be an annoyance. They can be unwanted sounds in the recording. They can be considered to be noise. US Patent Application 20090103750, for example, discusses the annoying nature of audible "click-and-pop" artifacts.

The concepts described below are directed to techniques for noise cancellation. As a general matter, the noises that may be generated by switch activation may be to a large degree predictable. A switch, activated on an earlier occasion, is likely to make the same sound if activated in the same manner on a later occasion. Having data about what sounds are associated with switch activation, and further having data pertaining to the time interval between the sound being generated and the sound being picked up by a microphone on the portable electronic device, the device may apply an inverse of the sound to the recording to cancel the unwanted sound without seriously affecting other sounds being recorded at the same time. Described below are processes by which the data about sounds associated with switch activation may be captured and stored. Also described below are processes by which, during audio recording, an inverse of the sound may be applied to cancel the sound associated with switch activation.

In one aspect, the concepts are directed to a method that can be practiced in a device having a switch, memory and a microphone. The method includes, during audio recording, detecting an activation of the switch and receiving at the microphone a sound associated with the switch. The method also includes retrieving from memory a representative switch sound associated with the switch, the representative switch sound having an inverse form. The method also includes applying the inverse form to the received sound to cancel the sound.

As will be described in detail, a device may obtain data about the sounds that it or its switches make, and the representative switch sounds may be a function of actual sounds made by the actual switches. Prior to the audio recording, the device may detect a first activation of the switch. (Terms such as "first" and "second" are generally used to distinguish similar elements or events or limitations from one another, and not to imply any temporal order. In this particular instance, however, the "first" activation does precede the other activation mentioned earlier.) The sound associated with that first activation is received by the microphone, and the representative switch sound is stored in memory. The representative switch sound is a function of the first sound (and may be a function of other sounds as well).

In another aspect, the concept may be embodied as a portable electronic device that can generally carry out the processes. The portable electronic device may include a switch. A sound is associated with an activation of the switch. The portable electronic device may also include a microphone configured to receive the sound, and memory, and a
a processor configured to detect the activation of the switch during audio recording, retrieve from memory a representative switch sound associated with the switch (the representative switch sound having an inverse form) and apply the inverse form to the received sound to cancel the sound. The portable electronic device may also include other apparatus, such as a camera that may be used to record video.

### BRIEF DESCRIPTION OF THE DRAWINGS

Embodiments of the present disclosure will now be described, by way of example only, with reference to the attached Figures. Reference numerals may be repeated among the Figures to indicate corresponding or analogous elements.

FIG. 1 is a simplified block diagram of one example of a portable electronic device in accordance with the present disclosure.

FIG. 2 is a conceptual diagram illustrating storage of information in memory, the stored information associated with a function.

FIG. 3 is flow chart illustrating a process by which the stored information may be captured or acquired.

FIG. 4 is a flow chart illustrating a process by which unwanted sounds in an audio recording may be cancelled.

### DETAILED DESCRIPTION

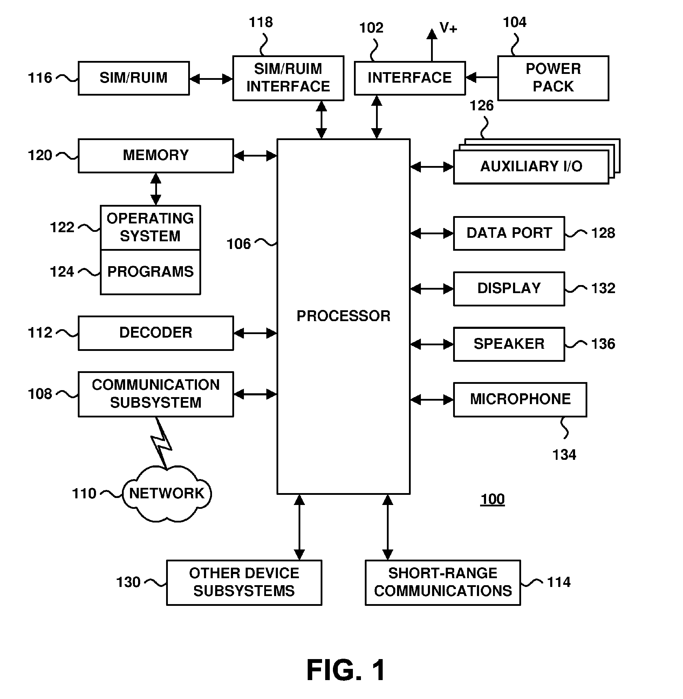

FIG.1 is a simplified is a simplified block diagram of a portable electronic device 100 that can practice the techniques to be described in more detail below. The techniques are not restricted to this particular portable electronic device, however. The portable electronic device 100 may be sized and shaped to be readily carried from place to place. The portable electronic device 100 may also be handheld, that is, sized and shaped to be held or carried in a human hand.

The portable electronic device 100 optionally includes data and voice communication capabilities, and may communicate with other electronic devices directly or through one or more wireless networks. The portable electronic device 100 may be based on the computing environment and functionality of a handheld computer or a smart phone. As will be described below, the portable device also includes recording capability.

The various components are operably connected to one another. That is, the components are physically, mechanically and/or electronically connected such that they can function in cooperation or concert with one another. Functioning in cooperation or concert may include controlling or being controlled by another component or transmitting electrical signals to or receiving signals from another component. The lines in FIG. 1 with arrows depict some illustrative operative connections, but the concepts described herein are not limited to this configuration of connections.

The portable electronic device 100 includes an interface 102 for receiving a power pack 104, which supplies power to the electronic components of the portable electronic device 100. The power pack 104 may be one or more rechargeable batteries or another type of power source, such as a fuel cell, or any combination of power sources. Although the portable electronic device 100 may also receive power wirelessly or by a conductor from an external source, the power pack 104 may supply power in ordinary usage, thereby making the portable electronic device 100 more readily portable.

The portable electronic device 100 includes a processor 106, which controls the overall operation of the device 100. The processor 106 may be configured to perform (that is, may be capable of performing) any number of operations or functions. Although depicted in FIG.1 as a single component, the processor 106 may be embodied as a set of processors or sub-processors or other specialized data processing components (such as a clock that can measure time intervals between events). A communication subsystem 108 controls data and voice communication functions, such as email, PIN (Personal Identification Number) message functions, SMS (Short Message Service) message functions and cellular telephone functions, for example. The communication subsystem 108 may receive messages from and send messages to a wireless network 110, which may be a data-centric wireless network, a voice-centric wireless network or a dual-mode wireless network. Data received by the portable electronic device 100 is decompressed and decrypted by a decoder 112.

In FIG. 1, the communication subsystem 108 is a dual-mode wireless network that supports both voice and data communications. The communication subsystem 108 may be configured in accordance with the Global System for Mobile Communication (GSM) and General Packet Radio Services (GPRS) standards. The communication subsystem 108 may alternatively be configured in accordance with Enhanced Data GSM Environment (EDGE) or Universal Mobile Telecommunications Service (UMTS) standards. Other wireless networks may also be associated with the portable electronic device 100, including Code Division Multiple Access (CDMA) or CDMA2000 networks. Some other examples of data-centric networks include WiFi 802.11, Mobitex™ and DataTAC™ network communication systems. Examples of other voice-centric data networks include Personal Communication Systems (PCS) networks like GSM and Time Division Multiple Access (TDMA) systems.

The wireless network 110 may include base stations (not shown) that provide a wireless link to the portable electronic device 100. Each base station defines a coverage area, or cell, within which communications between the base station and the portable electronic device 100 can be effected. The portable electronic device 100 is movable within the cell and may be moved to coverage areas defined by other cells. The portable electronic device 100 may further include a short-range communications subsystem 114, which enables the device 100 to communicate directly with other devices and computer systems without the use of the wireless network 110 through infrared or Bluetooth™ technology, for example.

To identify a subscriber for network access, the portable electronic device 100 uses a Subscriber Identity Module or a Removable User Identity Module (SIM/RUIM) card 116 for communication with a network, such as the wireless network 110. The SIM/RUIM card 116 may be physically or electronically coupled or both to the other components via an interface 118. Alternatively, user identification information may be programmed into memory 120. The SIM/RUIM card 116 is used to identify the user of the portable electronic device, store personal device settings and enable access to network services, such as email and voice mail, for example, and is not bound to a particular portable electronic device 100.

The processor 106 is connected to memory 120, which may include Random Access Memory (RAM) and or any other kind of volatile or non-volatile memory.
Although depicted as a single component, memory 120 may comprise several distinct memory elements. Memory 120 typically stores software executed by the processor 106, such as an operating system 122 and software programs 124. Such software may be stored in a persistent, updatable store. Applications or programs may be loaded onto the portable electronic device 100 through the wireless network 110, the auxiliary input/output (I/O) subsystems 126, the data port 128, the short-range communications subsystem 114, or any other device subsystem 130. Some examples of software applications that may be stored on and executed by the device 100 include: electronic messaging, games, calendar, address book and music player applications. Software applications that control basic device operation, such as voice and data communication, are typically installed during manufacture of the device 100. Other software that may be stored in memory 120 includes instructions for recording and audio processing, as described in more detail below.

The auxiliary I/O subsystems 126 includes any of several input and output systems. The auxiliary I/O subsystems 126 may include, for example, a camera, which receives visual input (which may include still or moving images or both). The auxiliary I/O subsystems 126 may also include a light or a lamp to illuminate the scene or produce a flash when the camera is receiving visual input for recording. The auxiliary I/O subsystems 126 may further include one or more physical controls, such as switches or keys or keyboard or buttons that may be activated by a user. All such user-activated devices will be referred to as "switches" for simplicity. The auxiliary I/O subsystems 126 may be under the control of or supply input to the processor 106.

Some other input-output devices are shown explicitly in FIG. 1. These input-output devices may be under the control of or supply input to the processor 106. A display 132 may present visual information to a user. The display 132 may be of any type. In some embodiments, the display 132 may be a touch screen that can display visual output and receive touch input. A microphone 134 may pick up audible information, that is, the microphone 134 may receive or capture audible information in the form of sound waves and convert the audible information to analog or digital signals or a combination thereof. The microphone 134 may be of any type, and may receive audible input in a number of situations, such as speech during voice communication, or sounds during audio recording, or sounds during audio recording with video recording. A speaker 136 may present audible information to a user, either as sounds alone or in concert with visual information. In general, a user may, via the input-output devices, record, control, store, process and play back audio recordings (which may include video recordings). The user may also engage in any number of other activities, such as writing and sending email or text messages, initiating or receiving telephone communications, viewing web pages, playing games, and so on.

The portable electronic device 100 components are generally housed in a housing (not shown), which typically gives some structural integrity or overall shape to the device 100 and which may be part of the device frequently touched by a user. The housing that may expose the display 132, and include one or more ports for the speaker 136 and the microphone 134. The housing may also include access to one or more input/output devices, such as buttons or other switches.

As previously noted, the portable electronic device 100 may include camera hardware and associated software that is executable by the processor 102. The camera may be capable of capturing video for recording, in combination with sound picked up by the microphone 134. Some device components may be movable relative to the housing (or relative to each other). Movable components may generate noise during or by movement, and this noise may be picked up by the microphone 134. In other words, the sounds that may be generated by moving parts may be undesirable in an audio or audiovisual recording. Examples of sound-producing events may include: extension or retraction of a telescoping camera lens, actuation of a device button, pressing of a key, and so forth. During a recording, such as a video recording, it may be expected that one or more of these noises may be generated. For example, a user may press "zoom in" or 'zoom out" switches to control the zoom function of the camera and direct the field of the camera's view. Pressing the switches may generate one or more sounds, which in themselves may be both undesirable and at the same time desirable. The sounds may be undesirable in that they may be picked up by the microphone 134 and be included as unwanted sounds in the audio recording that accompanies the video. But the sounds may at the same time be desirable, because they may supply an auditory feedback to the user that a switch has indeed been activated.

Many switches have a mechanical activation that involves moving parts. In some typical forms of switches, one electrical contact is brought into physical contact with another, thereby enabling current flow, which acts as a signal (e.g., a single to zoom in). The making of contact between parts may generate a "click" or other noise, which may be difficult to muffle (or difficult to muffle consistently). Even in the event a switch is silent, however, it may be desirable for the processor 106 to control the speaker 136 to generate an auditory feedback signal, such as artificial or machine-created sound such as a "beep," which may be emitted via the speaker 136. Whether the sounds associated with activation of switches result from physical contact of things or from artificial generation, the sounds can be undesired artifacts of an audio recording.

In some kinds of switches, it may be possible for the processor 106 to detect that the switch is about to be activated before the actual activation occurs. For example, some touch-sensitive switches can detect a user's touch, which may precede activation. Other types of switches may detect pressure that precedes a depression. Still others may include two switches that are activated one after the other, although the user may perceive them as being only a single switch. A first small switch may be activated a short time before a larger switch is activated, and the first switch signals that the second is about to be activated. Some methods for detection of a pending activation of a switch before the actual activation may also indicate the manner in which the user activates the switch, such as by a gentle and slow depression or a harder and faster press.

Generally speaking, when a switch is activated, a noise may be expected to occur. This noise may be picked up by the microphone 134 and be an undesirable artifact on the audio portion of a recording. The concepts described herein are directed to apparatus and techniques by which the sounds created by or otherwise associated with switch activations may be cancelled (that is, largely or completely removed) from the recording.

In portable electronic devices that have one or more switches for which it is possible for the processor 106 to detect that the switch is about to be activated, one approach is to simply stop recording at the time the noise is expected to occur. This result, however, produces gaps in the recording that may be perceptible and that may detract from the quality of the recording. The gaps themselves may be undesired artifacts in the audio recording. Described below is a technique whereby noises may be removed without the creation of such gaps.

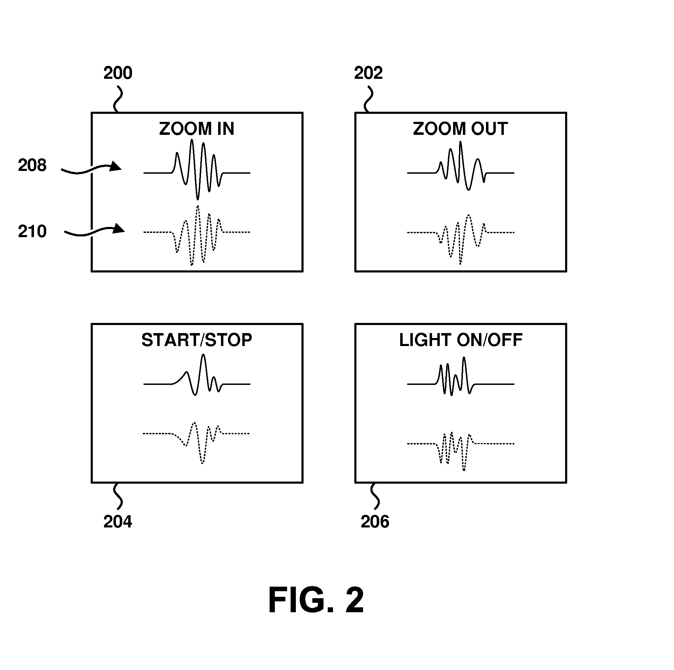

FIG. 2 is a conceptual diagram illustrating one embodiment of the concept. FIG. 2 may be thought of as a pictorial representation of information stored in memory 120. The information is depicted as stored in a table, but the information may be stored in any form of structure or in any fashion. Information is shown for four illustrative functions: "zoom in" 200, "zoom out" 202, "start/stop" 204 and "light on/off" 206. In actual operation, there may be more or fewer or different functions than these. Each function is associated with activation of a different switch. For example, a first switch, when depressed, may turn the cause the camera to zoom in, and a second switch, when depressed, may turn the cause the camera to zoom out. Each switch may make a sound, and each sound may be picked up by the microphone 134. Notably, the sounds of the individual switches may be, but need not be, similar to one another or identical.

In the information associated with the "zoom in" function 200, for example, stored in memory 120 is a representation of the sound that is created when the 'zoom in" switch is activated by a user. In FIG. 2, the representative switch sound 208 is depicted as a sound waveform, but the sound may be stored in any fashion (e.g., as a set of frequency and amplitude components, or an ordered set of coefficients, or a set of representative data points, or any other digital or analog representation). The representative switch sound 208 represents the sound that can be expected to be made by the switch when activated; the waveform is in its original (non-inverse) orientation. Also shown in FIG. 2, and associated with the "zoom in" function 200, is the inverse 210 of the sound 208. The inverse 210 is depicted as a waveform, but the inverse likewise may be stored in any fashion. Notably, since the sound 208 and its inverse 210 are mathematically related to one another, it need not be necessary to store both, and FIG. 2 shows both sound and inverse being stored for purposes of illustration. For purposes of the following discussion, the representation of the sound associated with a function, whether stored in its original orientation or whether stored as an inverse, will be called a "representative switch sound."

The inverse may be derived from the sound in any fashion (e.g., by a mathematical process, such as making amplitudes of the sound the negatives of their original values, or by using an inverting circuit). The other functions 202, 204, 206 also have associated representative switch sounds (originals and inverses). For purposes of illustration, each function's representative switch sounds are different from the others. Although not shown in FIG. 2, there may also be stored a timing associated with each sound associated with each switch. In a typical embodiment, the timing may be a measure of the time between the generation of the sound and the picking up of the sound by the microphone 134.

In some embodiments, more than one sound or inverse may be associated with a function. For example, a key pressed softly may make a soft "click," but the same key pressed more firmly or rapidly may make a louder click. The processor may store two (or more) representative switch sounds (originals and/or inverses) associated with activation and with the manner in which the switch is activated. In another example, a switch may be operated in two separate ways, and may make different sounds depending on how the switch is operated. For example, a switch may make a first sound when pressed, and a second sound when released, and the first and second sounds may be distinctly different. The information about the press sound and the release sound may both be associated with a single function; but another approach may be to store the data such that pressing the switch may be deemed to be one function, and releasing the same switch may be deemed to be a separate function, with different sounds and inverses for press and release. For simplicity, it will be assumed that similar techniques may be applied for handling press sounds associated with a switch and release sounds associated with the same switch, and both pressing and releasing may be deemed to be activation of the switch.

The inverse of a sound is simply the negative of the sound. That is, superposition of the sound and its inverse results in no net sound. (Superposition in this context may also colloquially be called addition, as adding the negative of a quantity to that quantity is zero.) During recording, when the inverse of a sound is superimposed on the original sound, the result is canceling the sound. Applying the inverse form of representative switch sounds to the actual switch sounds (which may be deemed to be unwanted noise) has the effect of cancelling the actual switch sounds from the recording, and thereby handling or suppressing the noise. This cancellation generally affects the switch sound itself and does not significantly affect any other audio recording that may be occurring. As a general matter, sounds picked up by the microphone 134 include sound waves of a number of frequencies and amplitudes superimposed upon one another. The unwanted sound that would ordinarily be caused by activation of a switch gets picked up by the microphone 134 and likewise is superimposed on all of the other sounds. But superimposing the inverse cancels the unwanted sound associated with the switch, while leaving other sounds generally unaffected. The result is a more pleasing audio recording with fewer audio artifacts.

Superposition can be achieved by any of several signal processing methods, or combinations of signal processing methods. Superposition may be carried out in the digital domain or in the analog domain. Further, there are many ways in which the negative of a sound may be temporally aligned with the sound to result in cancellation of the sound. In the case of a switch for which it is possible for the processor 106 to detect that the switch is about to be activated, for example, the processor 106 may use the detection that the switch is about to be activated as a cue to be ready to perform the superposition. Another technique may be to perform the cancellation as the contact of parts is made and the sound is generated, and take advantage of the fact that electronic signals can move faster than the speed of sound. For example, the user may depress the switch, but before the resulting "click" is picked up by the microphone 134, the processor 106 gets ready to perform the superposition. When the "click" is then is picked up by the microphone 134, the processor 106 may process the signal from the microphone 134, applying the inverse to cancel the "click."

The techniques are not limited to sounds made by moving parts. The same techniques may apply to artificial or machine-created sounds generated in response to activation of a switch (such as a beep to announce that a light is being turned on). The inverse of the artificial sound may be superimposed upon the artificial sound itself, cancelling the artificial sound. A potential benefit of this technique is that the user may hear the artificial sound, but the artificial sound may be absent from any recorded audio, even though the microphone 134 may have picked up the artificial sound.

Some artificial sounds may be known or may be uniform from switch to switch or device to device. For example, an artificial beep may have an established or selected waveform that may be essentially uniform from one portable electronic device to another. In the cases of switches that make sounds as the result of contacts of moving parts, however, there may be variations, perhaps subtle variations, in the sounds from switch to switch. Multiple switches on a single portable electronic device, even if they are switches of like kinds, may make different sounds when activated. The difference in sounds may result from any of several factors, such as variation in manufacturing, site of deployment on the portable electronic device, amount of use, muffling or reflective effects of components in proximity to the switch, and so on.

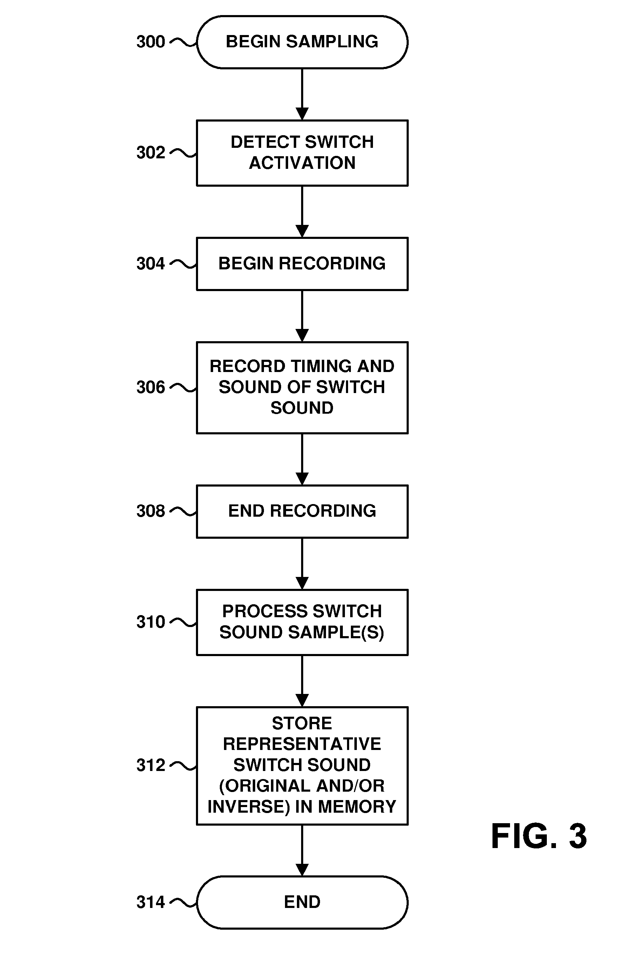

FIG. 3 is a flow chart illustrating an example of a process by which data may be collected for sounds associated with functions. This process may be embodied as a computer program 124 that may be executed by the processor 106. This process supports customization of noise cancellation, such that a particular portable electronic device may acquire data about the sounds particular to the switches on that portable electronic device, and then use the collected data to store representative switch sounds. The representative switch sounds, in particular the inverses, can be applied to cancel the actual sounds associated with switches so that those sounds will not appear as artifacts in audio recordings. Although the process depicted in FIG. 3 is shown as occurring once, the process may be performed any number of times. The process may optionally be performed, for example, when the portable electronic device is undergoing its first usage, and then again an extended time (such as a year) later. In other words, if the sounds associated with the switches change over time, the process may be used to adapt to the changes. The process, or parts of it, may also optionally be performed several times in a comparatively short period of time, as will be described below.

The data collection begins with sampling of a sound (300) associated with activation of a particular switch. One way to collect the data is to detect the activation of the switch (302) and begin recording (304) to listen to the resulting sound that the microphone 134 picks up. The amount of time elapsing between the activation and the picking up of the sound by the microphone 134 may be recorded as well (306). In some embodiments or uses, commencement of recording (304) may precede switch activation. As previously noted, detection of activation may include detection of actual switch activation or detection of an event that indicates the switch is about to be activated. The sound and timing for an associated switch are captured (306). The processor 106 may, for example, make one or more measurements of the time interval between the activation of the switch and the time when the resulting sound is received by the microphone 134, and the timing may be a function of that measurement (or those measurements). In those cases in which, for example, a hard press may make one sound and a soft press a different sound, then the manner of switch activation (e.g., hard or soft) may be captured as well. After capture of these data, recording may stop (308).

Data collection in this way may be performed more than one time for each switch. In a typical usage, several recordings (306) may be made. Several recordings may reduce the risk of unwanted ambient noise interfering with the recording of the sound and the timing (308). Several recordings may also be useful in identifying the consistency of the sounds made. As a general matter, it has been discovered by testing that sounds made by individual switches tend to be substantially the same from activation to activation. A representative switch sound is to be determined and stored, with the representative switch sound being a function of the actual switch sounds picked up by the microphone 134. There are many ways in which a representative switch sound may be determined. For example, one or more samples may be processed (310) to remove ambient noise, or to average or weight the various samples, or to derive a "typical" or representative sound that is associated with activation of a particular switch, or derive a timing by which a sound associated with activation may be picked up by the microphone 134, or to make adjustments or refinements to a previously stored sound sample or inverse, or to select which of several recorded sounds is the most fairly representative of the sound that the switch may be expected to make. The representative switch sound may be stored in memory 120, along with the timing (312). The data collection process may be performed for any number of switches. After the data is collected and processed, and representative switch sounds and timings are stored in memory, the process may end (314).

Data that are collected, processed and stored as illustrated in FIG. 3 may be obtained in several ways. For example, the portable electronic device 100 may collect, process and store data "on the fly," that is, during actual use of the device. Another technique, which may produce faster results and be more efficient, may be to offer the user an orientation program. When the user first begins to use the portable electronic device 100, the orientation program (which may be written in a pamphlet, or an interactive orientation stored in memory 120, executed by the processor 106 and presented via the display 132 and the speaker 136) directs the user to activate the various switches. The user may be prompted to conduct the orientation away from ambient noise. As the user becomes oriented and learns how the portable electronic device 100 operates, a data collection process like that of FIG. 3 may occur. This data collection, processing and storage may occur with or without the user's knowledge. Another alternative may be to test (e.g., by mechanical testing) each portable electronic device 100 prior to sale or deliver to a user, such that each portable electronic device 100 comes to the user with representative switch sounds already in memory, such that the device comes to the user capable of canceling sounds from audio recordings. In a further variation, a portable electronic device 100 may come to the user with expected (but not necessarily measured by individual testing) representative switch sounds for the associated switches, and these representative switch sounds may be adjusted or replaced as actual sounds are encountered and recorded. Any or all of these techniques (or others) may be employed.

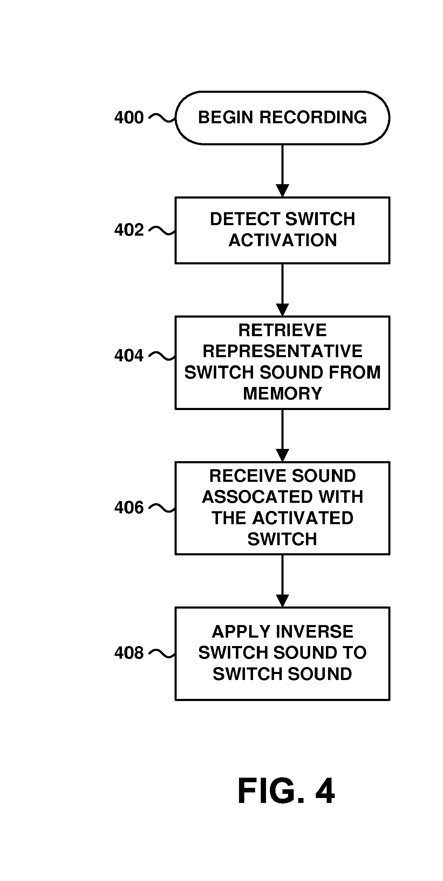

Once the data for sounds associated with particular switches are collected, processed and stored, the representative switch sounds may be used to cancel noises in audio recordings. FIG. 4 illustrates a basic process. When audio recording begins (400), the risk of artifacts in the audio recording is present. Switch activation is detected (402), which may include detecting or otherwise determining which of several switches has been (or is about to be) activated. Detection of switch activation (402) may also include the manner of activation, such as a hard press or a soft press. After switch activation is detected (402), the representative switch sound associated with that activation is retrieved from memory (404). As previously noted, the representative switch sound may be a representation of the original switch sound, or its inverse form. In cases in which the representative switch sound is the representation of the original switch sound, the inverse optionally may be created by mathematical process. The representative switch sound may be associated with the activated switch (and, in some embodiments, the manner of activation, such as hard or soft activation, or press or release). The sound associated with the switch activation is received by the microphone 134 (406), and the inverse (that is, the inverse form of the representative switch sound stored in memory) is superimposed upon or otherwise applied to the sound (408), thereby canceling the sound. The recorded timing between the generation of the sound and the picking up of the sound by the microphone 134 may be used so that the inverse may be applied at the correct time or position in the audio recording to cancel the sound. Other techniques for aligning the inverse with the sound to be cancelled may also be used. The microphone 134 may continue to pick up sounds for recording the entire time, and other sounds picked up by the microphone 134 will be less affected or unaffected by the cancellation. Unwanted sounds may be cancelled as they are picked up, or after they have been actually recorded.

The processes described herein may be embodied in instructions executable by the processor 106, and may be stored in memory 120. The instructions may also be stored on one or more computer- or machine-readable medium that allows a machine such as the portable electronic device 100 to read data, instructions, messages or message packets, and other machine-readable information from the machine-readable medium. The machine-readable medium may include a machine-readable storage medium embodying non-volatile memory, such as read-only memory (ROM), flash memory, disk drive memory, CD-ROM, and other permanent storage. Additionally, such a medium may include volatile storage such as RAM, buffers, cache memory, and network circuits. Furthermore, the machine-readable medium may comprise machine-readable information in a transitory state medium such as a network link and/or a network interface, including a wired network or a wireless network, that allow a machine to read such machine-readable information.

One or more embodiments may realize one or more benefits, some of which have been mentioned already. As a general matter, the sounds that are associated with switch activation can be annoying when those sounds appear in audio recordings, and the techniques described herein can reduce or eliminate such unpleasant audible artifacts. Further, the techniques are readily adaptive, not only from switch to switch and from portable electronic device to portable electronic device, but also among a variety of portable electronic devices. The techniques can be adapted to a number of portable electronic devices, including dedicated portable audio and video recorders. The techniques can be adapted to devices of any size and shape, although the concerns attendant to sounds from switches may be more acute in devices that are handheld or miniaturized. Handheld devices may have more switches in closer proximity than other devices for which considerations of size and weight might not be as important. The concepts may also be applied to devices that have any number of switches, or multiple cameras or speakers or microphones. Further, the concepts can be applied any number of times during an audio recording, and this can be beneficial in instances in which a switch (such as one of the switches controlling zoom) is repeatedly activated. Multiple sounds can be cancelled. Gaps in the audio recording to blank the unwanted sounds may be rendered unnecessary.

In general, the prospects for successful noise handling may be improved when the same microphone is used for collecting the sample sounds associated with switches, as is used to record audio in normal use. A further potential benefit is that some switches need not be made to strict manufacturing tolerances of sound suppression, since the sounds they make can be cancelled from audio recordings. More economical components or more readily available components may therefore be used. Also, if there are long-term changes to the sounds associated with the switch activations, the sounds can be sampled anew and more effectively cancelled.

Further, the concepts are not strictly limited to switches. If during audio recording there is, for example, an audible low battery warning (or other audible annunciation unrelated to any user activation of switches or any other user action, such as receipt of an email message), that sound likewise can be cancelled, much in the way an artificial sound associated with a switch activation may be cancelled. Also, some sounds that may be caused by other moving parts, such as sounds due to lens movement or device vibration, may be cancelled as well.

In the preceding description, for purposes of explanation and illustration, numerous details have been set forth in order to provide a thorough understanding of many embodiments of the disclosure. However, it will be apparent to one skilled in the art that some or all of these specific details may not be required in order to practice the disclosure. In other instances, well-known electrical structures and circuits are shown in block diagram form in order not to obscure the disclosure. For example, specific details are not provided as to whether the embodiments of the disclosure described herein are as a software routine, hardware circuit, firmware, or a combination thereof. The above-described embodiments of the disclosure are intended to be examples only. Alterations, modifications and variations can be effected to the particular embodiments by those of skill in the art without departing from the scope of the disclosure.

## Claims

1. A method in a device having a switch, memory and a microphone, the method comprising:
during audio recording, detecting an activation of the switch (302, 402);
retrieving from memory (120) a representative switch sound associated with the switch, the representative switch sound having an inverse form (404);
receiving at the microphone (134) a sound associated with the switch (406);
and
applying the inverse form to the received sound to cancel the sound (408).

2. The method of claim 1,
wherein the activation of the switch comprises a second activation of the switch, and
wherein the sound associated with the switch comprises a second sound associated with the switch,
the method further comprising:
prior to the audio recording, detecting a first activation of the switch (302);
receiving at the microphone a first sound associated with the switch (306);
and
storing the representative switch sound in memory, the representative switch sound being a function of the first sound (312).

3. The method of claim 2, wherein storing the representative switch sound in memory comprises storing the representative switch sound in memory in the inverse form.

4. The method of claim 2, further comprising:
measuring a time interval between the first activation and the receiving at the microphone of the first sound; and
storing a timing in memory, the timing being a function of the measurement.

5. The method of claim 2, wherein the sound associated with the switch comprises a natural sound.

6. The method of claim 2, further comprising:
detecting a third activation of the switch;
receiving at the microphone a third sound associated with the switch; and
storing the representative switch sound in memory, the representative switch sound being a function of the first sound and the third sound.

7. The method of claim 2, wherein the switch comprises a first switch, the device further having a second switch, the method further comprising:
detecting an activation of the second switch;
receiving at the microphone a fourth sound associated with the second switch; and
storing a second representative switch sound in memory, the second representative switch sound being a function of the fourth sound.

8. The method of claim 1, wherein audio recording comprises video recording.

9. The method of claim 1, wherein the device further has a video camera, and
wherein the switch is a switch that controls a zoom function of the video camera.

10. A portable electronic device comprising:
a switch (126), wherein a sound is associated with an activation of the switch;
memory (120);
a microphone (134), the microphone configured to receive the sound associated with the activation of the switch; and
a processor (106), the processor configured to:
during audio recording, detect the activation of the switch (402);
retrieve from memory a representative switch sound associated with the switch, the representative switch sound having an inverse form (404); and
apply the inverse form to the received sound to cancel the sound (408).

11. The portable electronic device of claim 10, the portable electronic device further comprising a camera (126) configured to capture video.

12. The portable electronic device of claim 10, wherein the sound is associated with the activation of the switch is an artificial sound, the portable electronic device further comprising a speaker configured to emit the artificial sound.

13. The portable electronic device of claim 10,
wherein the activation of the switch comprises a second activation of the switch, and
wherein the sound associated with the switch comprises a second sound associated with the switch,
the processor further configured to:
prior to the audio recording, detecting a first activation of the switch; and
store the representative switch sound in memory, the representative switch sound being a function of a first sound associated with the switch and received at the microphone.

14. The portable electronic device of claim 13, wherein the processor is further configured to:
measure a time interval between the first activation and the receiving at the microphone of the first sound; and
store a timing in memory, the timing being a function of the measurement.

15. The portable electronic device of claim 10, where in the switch is one of a zoom in switch, a zoom out switch and a lighting control switch.
